# EUROPEAN PATENT APPLICATION

(11) **EP 4 764 944 A1**
(43) Date of publication of application: **24.06.2026**
(21) Application number: 24222419.4
(22) Date of filing: 20.12.2024
(51) Int. Cl.: G06K 19/07

(54) **RECTIFIER CIRCUIT FOR AN RFID TAG**

(71) Applicant: EM Microelectronic-Marin SA, 2074 Marin (CH)
(72) Inventor: BUESCHER, Kevin Scott, Colorado Springs, 80919 (US)
(74) Representative: ICB SA

(57) **Abstract**

In one aspect the present invention concerns a rectifier circuit (10) for a passive RFID circuit (1), the rectifier circuit (10) comprising:
- at least a first rectifier stage (11) comprising a first stage input (14) connectable to a first antenna port (6) and comprising a second stage input (15) connectable to a second antenna port (7),
- a first rectifying unit (12) connected to the first stage input (14) and connected to a first stage output (16),
- a second rectifying unit (18) connected to the second stage input (15) and connected to a second stage output (17),
- a trimming capacitor arrangement (30) connected to the first stage input (14) and connected to the second stage input (15), wherein the trimming capacitor arrangement (30) is electronically switchable to at least a first capacitance and to a second capacitance, and
- a first auxiliary rectifier stage (71) connected to the first antenna port (6), the second antenna port (7), the first stage output (16) and to the second stage output (17) and coupled to the trimming capacitor arrangement (30) to switch the trimming capacitor arrangement (30) into a predefined auxiliary configuration.

## Description

### Field of the invention

In one aspect the present invention relates to the field of rectifiers for use in RFID circuits, in particular for use in UHF RFID passive tags.

### Background

In general, in an RFID communication system, a receiving tag antenna may be adapted to maximize the received signal at a specific frequency, i.e. the tuning or trimming frequency. The adaption may be achieved for a specific antenna and tag input impedance. Every time an input frequency signal differs from the tuning frequency or when the tag or antenna impedance is differs from a value required to achieve adaptation the system suffers a loss in the received power. In operating conditions, various disrupting scenarios may take place for the following reasons:
- an input signal frequency can operate at different frequencies in the UHF RFID band [860-960] MHz],
- variations in electronic component values due to process or temperature may cause variation in the tag input impedance,
- and/or varying environmental conditions in which the tag operates, e.g. varying degrees of humidity, temperature and so on, and may alter the antenna impedance or adaptation.

An RFID circuit may be equipped with an automatic matching function by way of which the tag becomes operable to execute a trimming algorithm by way of which the input impedance of the RFID circuit, e.g. the input impedance of a rectifier circuit, can be automatically adapted, tuned or trimmed to the frequency of the received RF signal.

In general, manufacturing tolerances and environmental issues as described above can de-tune the RFID tag, which reduces the RFID tag performance. An initial start of the RFID tag can be therefore become problematic as there may not be enough energy present due to antenna to tag mismatch to initiate the automatic matching function, i.e. to execute the automatic trimming algorithm.

Conducting of an automatic matching or trimming function requires at least a minimum of electric power harvested from the received RF field. However, in an initial startup configuration of the RFID tag there may not be sufficient electric power from the external RF field due to antenna to tag mismatch. This problem is exacerbated because the trimming algorithm cannot default to a mid-trim point since there is not sufficient voltage available to set up any switches of a trimming or tunable capacitor arrangement by way of which the resonant frequency of the rectifier could be adapted or tuned to the frequency of the available RF field.

It is therefore desirable to provide improvements to the startup capability of a rectifier circuit of a RFID circuit under poor matching conditions caused by default settings of a trimming algorithm being e.g. at an extreme frequency, wherein no switching functionality is available when there is no voltage or only little voltage available at the start up.

### Summary of the invention

The above-mentioned objects will be solved and suitably addressed by a rectifier circuit, by a semiconductor device and by a method of operating a semiconductor device in accordance to the features of the independent claims. Examples and embodiments will be subject matter of the dependent claims.

According to one aspect there is provided a rectifier circuit for a passive RFID circuit. The rectifier circuit comprises at least a first rectifier stage comprising a first stage input connectable to a first antenna port and comprising a second stage input connectable to a second antenna port. The rectifier circuit further comprises a first rectifying unit connected to the first stage input and connected to a first stage output. The rectifier circuit further comprises a second rectifying unit connected to the second stage input and connected to a second stage output. The rectifier circuit further comprises a trimming capacitor arrangement connected to the first stage input and connected to the second stage input. The trimming capacitor arrangement is electronically switchable to at least a first capacitance and to a second capacitance. By way of the trimming capacitor arrangement the resonance frequency of the rectifier circuit can be modified electronically, e.g. by an automatic matching function or by a trimming algorithm, e.g. provided by a logic circuit of the RFID circuit.

The rectifier circuit further comprises a first auxiliary rectifier stage connected to the first antenna port, connected to the second antenna port, connected to the first stage output and connected to the second stage output. The first auxiliary rectifier stage is further coupled or connected to the trimming capacitor arrangement. The connection or coupling may be provided via an auxiliary control line. This way, the trimming capacitor arrangement is switchable into a predefined auxiliary configuration, e.g. via the auxiliary control line.

In some examples and when in the predefined auxiliary configuration the trimming capacitor arrangement comprises a predefined capacitance, which is larger than the first capacitance, e.g., a minimum capacitance and which is smaller than the second capacitance, which may be a maximum capacitance of the trimming capacitor arrangement.

By way of the auxiliary rectifier stage that can be provided a kind of an auxiliary rectifier path, that generates an auxiliary power based on a momentary matching between the resonance frequency of the rectifier circuit and the external RFID field. This auxiliary power that may be void of an EDC load current can be sufficient to switch the trimming capacitor arrangement into the predefined auxiliary configuration, thereby shifting the capacitance of the trimming capacitor arrangement into a midrange between a minimum at a maximum capacitance. In this way, a starting point for a trimming algorithm by way of which individual capacitors of the trimming capacitor arrangement are electronically switch can be shifted to a midpoint, which statistically reduces a frequency mismatch between the momentary resonance frequency of the rectifier circuit and the frequency of the external field.

Accordingly and by way of the auxiliary rectifier stage the trimming capacitor arrangement can be prematurely switched into the predefined auxiliary configuration, which switching may take place even if there is not voltage of power generated to energize the trimming algorithm of trimming switches. By activating a predefined auxiliary configuration of the trimming capacitor arrangement, the tunable capacitance of the trimming capacitor arrangement can be set to a midpoint per default, which statistically provides an increase of the voltage of power derivable from a mismatched external interrogating field.

By way of the auxiliary rectifier stage and the switching of the trimming capacitor arrangement into the predefined auxiliary configuration, there can be added a predefined threshold capacitance, that might be in the range of a mid-trimming range of the trimming capacitor arrangement. In this way, the resonance frequency of the rectifier circuit can be tuned or trimmed to a midrange despite the fact that there is no voltage or insufficient voltage available for switching the trimming capacitor arrangement to such a midrange capacitance.

In this way, a tag to antenna mismatch at the start of the RFID circuit can be reduced per default. This leads to a reduced tag antenna mismatch, which allows to harvest electrical energy faster and more efficient compared to solutions without such auxiliary rectifier stages.

As the voltage level increases during startup of the rectifier circuit or during startup of the RFID circuit the influence or the impact of the auxiliary rectifier stage may decrease and operation of trimming capacitor arrangement may be switched into a regular configuration or regular operation mode. The rectifier circuit may then become subject to an automatic matching function and a respective tuning algorithm may be executed by way of which the trimming capacitor arrangement can be switched to a desirable capacitance by way of which the resonant frequency of the rectifier circuit can be properly matched with the frequency of the RF field. This may lead to an increase of energy harvesting from the RF field and to a further increase of the input voltage, which may be then sufficient to start the functional operation of the RFID circuit, i.e. to operate the logic circuit of the RFID circuit.

According to a further example the trimming capacitor arrangement comprises a first switchable capacitor branch connected to the first stage input and connected to the second stage input. The first switchable capacitor branch may provide a first extra capacitance to the first rectifier stage. This first extra capacitance may be either switched on or switched off electronically by operating a respective switch. Operating the switch and hence adding of the first extra capacitance requires harvesting of a minimum switching voltage level from the RF field, i.e. a voltage above a predefined switching voltage threshold in order to execute a switching and to execute the automatic matching function or to execute the trimming algorithm by way of which the switchable capacitor branch can be either switched on or switched off.

According to a further example the first switchable capacitor branch comprises a first capacitor in series with the first switch. One of the first capacitor and the first switch is connected to ground. The other one of the first capacitor and the first switch is connected to the first stage input.

In this way and by operating the first switch, an extra capacitance can be provided by the first capacitor and can be selectively added or coupled to the first stage input electronically, i.e. by operating the respective switch.

According to a further example the first switchable capacitor branch comprises a first auxiliary switch, which is parallel to the first switch and which is in series with the first capacitor. The first auxiliary switch is connected to the auxiliary rectifier stage. It may be coupled to an output of the first auxiliary rectifier stage. Moreover, the first auxiliary switch is switchable by an output of the first auxiliary rectifier stage. In examples, wherein the auxiliary rectifier stage is connected or coupled to the trimming capacitor arrangement, the first auxiliary switch may be connected to the auxiliary rectifier stage via the auxiliary control line.

The first auxiliary switch may be switchable at an auxiliary control voltage, which is less than a control voltage required for switching of the first switch of the first switchable capacitor branch. In this way, the capacitance of the first capacitor of the first switchable capacitor branch may be added to the overall capacitance of the first switchable capacitor branch even in situations in which there might be harvested only insufficient voltage from the surrounding RF field, which is below a switching voltage required for switching of the first switch of the first switchable capacitor branch. Instead, the first auxiliary switch of the first switchable capacitor branch may be switched in order to provide or to add a supplemental capacitance to the first switchable capacitor branch.

According to a further example the first switchable capacitor branch comprises a second capacitor in series with a second switch. One of the second capacitor and the second switch is connected to ground. The other one of the second capacitor and the second switch is connected to the second stage input. This way, also the second stage input can be selectively provided with a second extra capacitance, namely when the second switch is closed.

Typically, the first capacitor and the second capacitor are of equal capacitance. In this way, and by switching the first and the second switches concurrently or simultaneously, both, the first stage input and the second stage input can be provided with a respective and common extra capacitance. This allows for an effective trimming or tuning of the trimming capacitor arrangement.

According to a further example the first switchable capacitor branch comprises a second auxiliary switch, which is parallel to the second switch and which is in series with the second capacitor. The second auxiliary switch is connected to the auxiliary rectifier stage. It may be coupled to an output of the first auxiliary rectifier stage. Moreover, the second auxiliary switch is switchable by an output of the first auxiliary rectifier stage. In examples, wherein the auxiliary rectifier stage is connected or coupled to the trimming capacitor arrangement the second auxiliary switch may be connected to the auxiliary rectifier stage via the auxiliary control line.

The second auxiliary switch may be switchable at a control voltage, which is less than a control voltage required for switching of the second switch of the first switchable capacitor branch. In this way, the capacitance of the second capacitor of the first switchable capacitor branch may be added to the overall capacitance of the first switchable capacitor branch even in situations in which there might be harvested insufficient voltage from the surrounding RF field, which is below a switching voltage required for switching of the second switch of the first switchable capacitor branch. Instead, the second auxiliary switch of the first switchable capacitor branch may be switched in order to provide or to add a supplemental capacitance to the first switchable capacitor branch.

According to a further example the rectifier circuit comprises a second auxiliary rectifier stage, which is connected to a first and to a second stage output of the first auxiliary rectifier stage. The second auxiliary rectifier stage is connected to the first and to the second antenna port. The second auxiliary rectifier stage is further coupled to the trimming capacitor arrangement, e.g., via the auxiliary control line.

The first auxiliary rectifier stage and the second auxiliary rectifier stage may be connected in series. According to some examples, the first auxiliary rectifier stage may be coupled or connected to the trimming capacitor arrangement via the second auxiliary rectifier stage. Hence, an output of the first auxiliary rectifier stage may serve as an input of the second auxiliary rectifier stage. It may be only and exclusively an output of the second auxiliary rectifier stage that is coupled or connected to the trimming capacitor arrangement. In this way, there can be provided a two-stage auxiliary rectifier by way of which there can be provided an improvement with regard to signal strength for switching the auxiliary switches of the trimming capacitor arrangement in mismatched frequency conditions.

According to a further example the rectifier circuit comprises a signal combiner, which is connected to the first and to the second stage outputs of a final rectifier stage. The signal combiner is further connected to the first and to the second antenna ports and is also connected to a first and to a second output of the first or second auxiliary rectifier stages. The signal combiner may comprise or provide an auxiliary voltage output, which may be coupled to the trimming capacitor arrangement in order to switch the trimming capacitor arrangement into the predefined auxiliary configuration and/or to switch the trimming capacitor arrangement into a regular trimming configuration.

According to some examples and when the auxiliary rectifier stage(s) is or are connected to the trimming capacitor arrangement via an auxiliary control line, the auxiliary voltage output of the signal combiner may be connected or may be connectable to the auxiliary control line.

By way of the signal combiner the regular output of a multistage rectifier can be combined with an output of the auxiliary rectifier. In situations where an output of the regular multi-stage rectifier would be sufficient to initiate or to conduct the auto trimming procedure the signal combiner may be configured to disable an operation of the auxiliary rectifier stages. Vice versa, and in situations where the output of the multistage rectifier, hence an output of the at least first rectifier stage and optional second or third rectifier stages would be insufficient to initiate or to trigger the auto trimming process or trimming procedure, the signal combiner may provide or may transfer operating signals from the auxiliary rectifier stage to the trimming capacitor arrangement in order to switch the trimming capacitor arrangement into the predefined auxiliary configuration.

According to another example the signal combiner comprises a main power output, which is connected to the auxiliary voltage output via a grounded gate transistor, e.g., via a grounded gate PMOS transistor.

In this way there can be prevented an overvoltage of the auxiliary voltage output of the signal combiner. Here, the source and drain of the grounded gate PMOS transistor are connected to the auxiliary voltage output and to the main power output, respectively. In this way, signals obtained at the auxiliary voltage output may be quasi-automatically clamped to the main voltage when the driving voltage of the PMOS transistor reaches approximately 700 mV. Such a clamping does not start until there is more than sufficient voltage on the auxiliary voltage output to bias the switches of the trimming capacitor arrangement. Since the main voltage is clamped by a shunt regulator the auxiliary voltage output is also clamped as they are shorted together through the grounded gate PMOS transistor.

It is further provided that the auxiliary switches should be disconnected once the regular automatch routine would start to operate so that the digital logic may take control of the settings of the switches of the trimming capacitor arrangement. This may be accomplished by having a set of parallel switches, one being driven by the auxiliary voltage output and the other one being driven by the trimming algorithm. When there is enough power available for the trimming algorithm to start the auxiliary switches will be disabled.

According to a further example the trimming capacitor arrangement comprises a second switchable capacitor branch, which is arranged parallel to the first switchable capacitor branch. The second switchable capacitor branch may provide a second extra capacitance to the first rectifier stage. The capacitance of the second capacitor branch may differ from the capacitance of the first capacitor branch. In some examples, the extra capacitances provided by the first and the second capacitor branches may be substantially equal.

The second switchable capacitor branch may be individually and independently switchable compared to the first switchable capacitor branch. Both, the first and the second switchable capacitor branches are electronically switchable, e.g. by an automatic matching function or by a respective trimming algorithm, e.g. executed by a logic circuit or logic unit of the passive RFID circuit.

The second capacitor branch parallel to the first switchable capacitor branch may be switchable in a likewise manner. The second switchable capacitor branch may be equally equipped with first and second capacitors as well as with first and second switches connected to the respective capacitors.

The capacitors of the second switchable capacitor branch may comprise a capacitance that differs from the capacitance of the capacitors of the first switchable capacitor branch. In this way, different extra capacitances can be added or coupled to the first and second stage input to adapt the resonance frequency of the rectifier circuit to the frequency of the RF field.

According to a further example the first switch comprises a first switching transistor. The second switch comprises a second switching transistor. The gate of the first switching transistor and the second switching transistor may be mutually connected or coupled. In this way, both switching transistors, i.e. the first switching transistor and the second switching transistor of the first or second switchable capacitor branch can be switched simultaneously or concurrently.

In this way, the extra capacitance provided by first and second capacitors of the respective first and/or second switchable capacitor branches can be simultaneously coupled to or decoupled from the first and second stage inputs, respectively.

in a further example the rectifier circuit comprises an auxiliary control, which is coupled to at least one of the first and the second auxiliary rectifier stages. The auxiliary controller is operable to enable or disable an operation of the trimming capacitor arrangement into the predefined auxiliary configuration. The auxiliary controller may be also operable to disable operation of the trimming capacitor arrangement in the predefined auxiliary configuration. It may be operable to switch the trimming capacitor arrangement into a regular configuration, in which there may be conducted or executed the auto trim procedure.

In a further example the trimming capacitor arrangement is switchable between a minimum capacitance and a maximum capacitance. When in the predefined auxiliary configuration, the trimming capacitor arrangement comprises a medium capacitance, which is larger than the minimum capacitance and which is smaller than the maximum capacitance. In this way and when switched into the predefined auxiliary condition there may be added a predefined extra capacitance or auxiliary capacitance to the overall capacitance of the trimming capacitor arrangement. This way, the resonance frequency of the rectifier circuit may be switched into a mid range frequency by way of which there can be statistically harvested more energy from an external RF field compared to situations in which the resonance frequency of the rectifier circuit would be at a minimum or maximum per default.

According to a further example the first rectifying unit comprises a first transistor, wherein one of a source and a drain of the first transistor is connected to the first stage input, wherein the other one of the source and the drain of the first transistor is connected to the first stage output and wherein a gate of the first transistor is connected to the second stage output. The first transistor may provide rectification of an AC signal derived from the antenna and provided by the first stage input.

Typically and according to a further example the second rectifying unit comprises a second transistor, wherein one of a drain and a source of the second transistor is connected to the second stage input, wherein the other one of the drain and the source of the second transistor is connected to the second stage output and wherein a gate of the second transistor is connected to the first page output. In other words, the first and the second transistors, i.e. the first and the second rectifying units are arranged in a bridging configuration. They may be cross connected.

Accordingly, the second rectifying unit, e.g. the second transistor provides rectification of an AC signal derived from the RF field and provided via the second stage input. The first rectifying unit, e.g. the first transistor provides rectification of an AC signal derived from the RF field and provided via the first stage input.

According to a further example and when the source of the first transistor is connected to the first stage input the drain of the second transistor is connected to the second stage input. Here, the drain of the first transistor is connected to the first stage output and the source of the second transistor is connected to the second stage output.

Vice versa, and when the drain of the first transistor is connected to the first stage input the source of the second transistor is connected to the second stage input. Here, the source of the first transistor is connected to the first stage output and the drain of the second transistor is connected to the second stage output.

According to a further example the rectifier circuit comprises a second rectifier stage comprising a third stage input connected to the first stage output of the first rectifier stage and further comprises a fourth stage input connected to the second stage output of the first rectifier stage. Providing a rectifier circuit with numerous rectifier stages improves the result of the rectifier function. Typically, the rectifier circuit comprises numerous rectifier stages arranged in series or arranged in a cascaded manner.

Typically, a first rectifier stage of the rectifier may be connected to a ground generator and the last rectifier stage of the rectifier may be connected to a signal combiner. Also, each rectifier stage may be individually connected to the first antenna port and to the second antenna port, respectively.

In a further aspect the present invention also relates to a semiconductor device comprising a RF antenna and comprising a rectifier circuit as described above. The semiconductor device further comprises a logic circuit, which is operable to electronically switch the trimming capacitor arrangement of the rectifier circuit to at least one of the first capacitance and the second capacitance.

Here and during startup of the semiconductor device, and when the resonance frequency of the rectifier circuit is mismatched compared to the frequency of the signal provided by the RF antenna the auxiliary rectifier stage(s) may serve to switch the trimming capacitor arrangement into the predefined auxiliary configuration, by way of which the trimming of the trimming capacitor arrangement can be effectively set to a midpoint or to a middle region of a trimming range. Typically, the trimming capacitor arrangement may be switchable between a minimum capacitance and a maximum capacitance. The extra capacitance or excess capacitance provided by the auxiliary rectifier-induced switching may be in a range midway between the minimum capacitance and the maximum capacitance. In this way, the extra capacitance provided per default by the voltage dependent variable capacitor arrangement can be effectively used for a startup of the rectifier circuit, i.e. when the voltage is at a particular low level or zero voltage level. In this way, the automatic matching function or the trimming algorithm to trim or to tune the trimming capacitor arrangement to a desirable capacitance can effectively start based on the extra or excess capacitance as provided by the auxiliary rectifier stage(s).

In the course of a rising voltage, due to harvesting of electrical energy from the RF field, the influence of the auxiliary rectifier stage(s) successively decreases and has a decreasing impact on the execution of the automatic matching function provided by the logic circuit operating or tuning the trimming capacitor arrangement to a capacitance value that provides a best match to adapted the resonance frequency of the rectifier circuit to the frequency of the RF field.

Typically, the semiconductor device is implemented as a passive RFID tag. In addition to the RF antenna, the rectifier circuit and the logic circuit may comprise at least one of the further electronic components: a reference voltage generator, a shunt limiter, an automatch comparator, a ring oscillator and a thermometer encoder as will be described further below.

The semiconductor device comprises a rectifier circuit as described above. Insofar, all effects, features and benefits as described above in connection with the rectifier circuit equally apply to the semiconductor device; and vice versa.

According to another aspect there is provided a method of operating a semiconductor device as described above. The method comprises the steps of harvesting electrical energy from an external RF field by the RF antenna of the semiconductor device. In a further step there is derived and provided an auxiliary control signal when an input voltage derived from the external RF field is below a switching voltage threshold, which threshold defines a minimum voltage required for electronically switching the trimming capacitor arrangement of the rectifier circuit. The auxiliary control signal may be derived or provided by the at least one auxiliary rectifier stage. It may serve to switch the trimming capacitor arrangement into the predefined auxiliary configuration, in which there may be provided an extra capacitance.

By adding or providing the extra capacitance to the first and second stage input of the rectifier circuit there can be emulated a starting condition at or near a midpoint trimming location of the trimming capacitor arrangement even though the switches for operating the trimming capacitor arrangement cannot yet be operated due to the low power or low-voltage conditions available at the startup of the rectifier circuit.

As soon as the voltage increases at the first and at the second stage inputs the impact or influence of the auxiliary rectifier stages may decrease. When the input voltage derived from the external RF field is at or above the switching voltage threshold the trimming capacitor arrangement can be operated to conduct or to execute an automatic matching function or an automatic trimming algorithm by way of which a best matching and hence a desirable capacitance of the trimming capacitor arrangement can be selected for tuning or trimming the resonance frequency of the rectifier circuit to the frequency of the RF field.

The method of operating a semiconductor device is typically executable by a rectifier circuit and by a semiconductor device as described above. Insofar, all features, effects and benefits as described above in connection with the rectifier circuit and/or the semiconductor device equally apply to the method of operating the semiconductor device; and vice versa.

### Brief description of the drawings

In the following numerous examples of the invention will be described in greater detail by making reference to the drawings, in which:
- Fig. 1 shows a schematic block diagram of an example of a first stage of a rectifier circuit,
- Fig. 2 shows a block diagram of the rectifier circuit comprising numerous rectifier stages,
- Fig. 3 shows a block diagram of an example of a semiconductor device comprising such a rectifier circuit,
- Fig. 4 shows a diagram illustrating an available power at load versus frequency for different configurations of the trimming capacitor arrangement, and

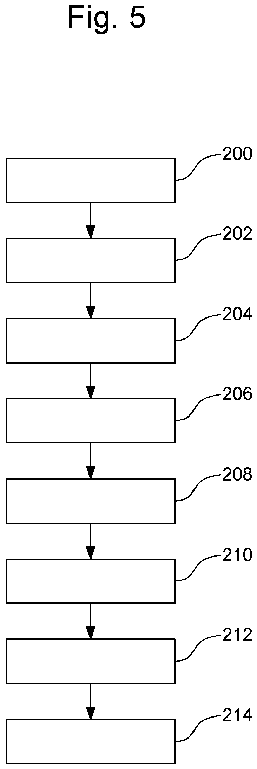

- Fig. 5 is a flowchart illustrating the method of operating a semiconductor device.

### Detailed description of the invention

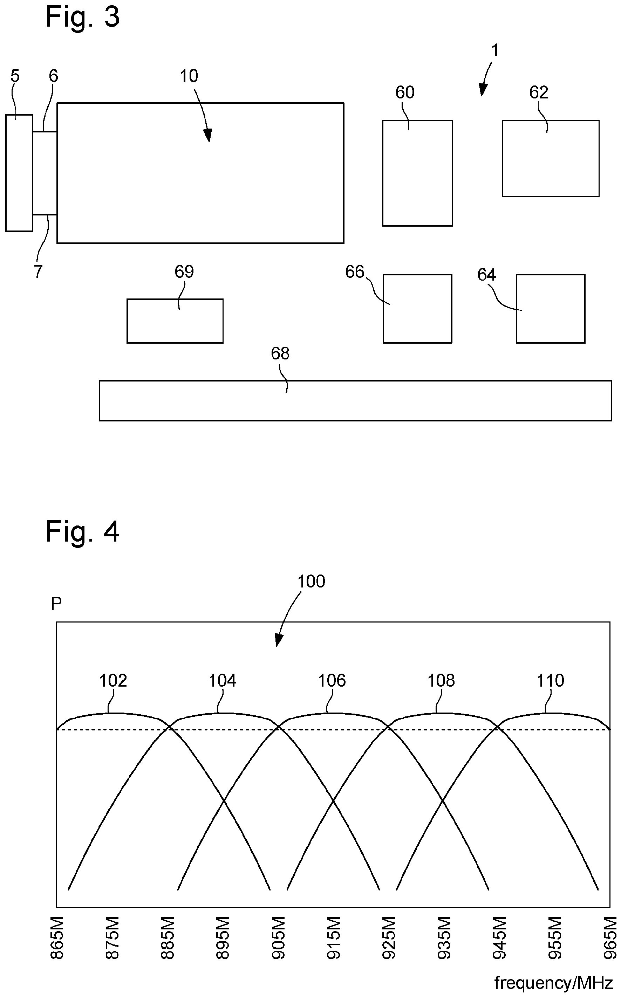

In Fig. 3 there illustrated a simplified and rather schematic block diagram of a passive UHF RFID circuit. The RFID circuit 1 comprises an antenna 5, which is connected to a rectifier circuit 10 by a first and a second antenna port 6, 7. The rectifier circuit 10 provides a transformation of an alternating AC signal as received from the antenna 5 into a DC signal required for operating the logic circuit 68 of the RFID circuit 1.

The RFID circuit 1 further comprises a reference voltage generator 60, a shunt limiter 62, and automatch comparator 64, a ring oscillator 66 and an optional thermometer encoder 69.

The logic circuit 68 and the automatch comparator 64 provide a limited operability at switching voltage threshold, which is below an operating voltage threshold required for the logic circuit 68 to provide the functional operation. Above the switching voltage threshold the automatch comparator 64 and the logic circuit 68 may be operable to conduct an automatic matching function and/or to execute a trimming algorithm by way of which the resonance frequency of the rectifier circuit 10 can be automatically adjusted to the frequency of the RF field. In this way, the rectifier circuit can be automatically trimmed to the available RF frequency. This way, external or internal influences that have an impact on the intrinsic resonance frequency of the rectifier circuit can be effectively compensated. Such external or internal influences may be manufacturing tolerances of the electronic components of the rectifier circuit or may be based on varying external conditions, such as humidity or temperature.

However, and as long as the voltage level derived from the antenna 5 is below the switching voltage threshold the automatic matching function or execution of the trimming algorithm cannot be conducted since the harvested energy and hence the voltage level currently available is insufficient to operate any switches that are required to modify a capacitance of a trimming capacitor arrangement 30 of the rectifier circuit 10.

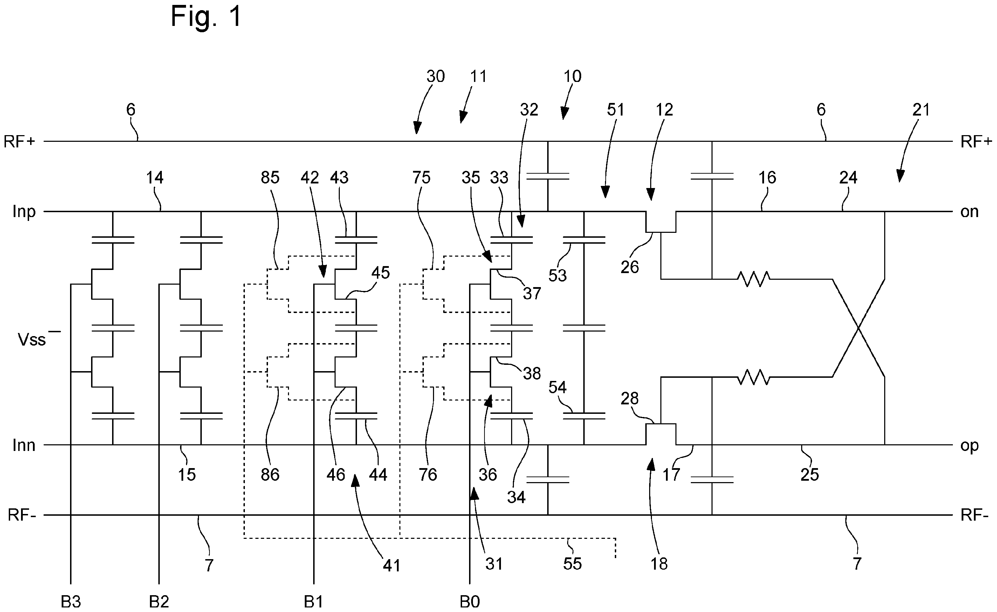

As e.g. illustrated in the block diagram of Figs. 1 - 3 the rectifier circuit 10 may comprise numerous rectifier stages 11, 12. A first rectifier stage 11 may be connected to a ground generator 13. The ground generator may be further connected to the first and second antenna ports 6, 7. In addition, both rectifier stages 11, 21 as well as further rectifier stages are individually connected to the first and second antenna ports 6, 7. A last rectifier stage of a e.g. large number of rectifier stages 11, 21, e.g. of up to 12 rectifier stages 11, 21 is connected to a signal combiner 19, which in turn is connected or connectable to the reference voltage generator 60 as well as to the shunt limiter 62. An output of the shunt limiter 62 is typically connected to the logic circuit 68. The reference voltage generator 60 as well as the shunt limiter 62 may be also coupled or connected to the logic circuit 68 in order to enable a proper operation of the electronic units or components.

In the diagram 100 of Fig. 4 there are illustrated five different graphs 102, 104, 106, 108 and 110 each of which illustrating a power level over frequency for different configurations of a trimming capacitor arrangement 30 of the rectifier circuit 10. The trimming capacitor arrangement 30 may be switched into a first configuration by way of which the power versus frequency graph 102 evolves. In a second configuration of the trimming capacitor arrangement 30 there can be obtained a dependency between power and frequency as e.g. shown by the graph 104.

The graph 106 is representative for another configuration of the trimming capacitor arrangement 30. The graph 108 represent another configuration of the trimming capacitor arrangement and the graph 110 finally shows a power dependency over frequency for a further trimming capacitor arrangement configuration. By selectively switching the trimming capacitor arrangement 30 from a first capacitance to a second capacitance, the behaviour of the trimming capacitor arrangement 30 can be switched e.g. from graph 102 to any other graph 104, 106, 108, 110, and vice versa. In this way, the resonance frequency of the rectifier circuit 10 can be switched and/or adapted to varying conditions or frequencies of the surrounding RF field.

In order to select one of the trimming capacitor arrangement configurations as represented by the graphs 102, 104, 106, 108, 110 the input voltage derivable from the antenna 5 must be at or above the switching voltage threshold.

In situations, in which the input voltage is below that switching voltage threshold no switching of the trimming capacitor arrangement or reconfiguration of the trimming capacitor arrangement will be possible.

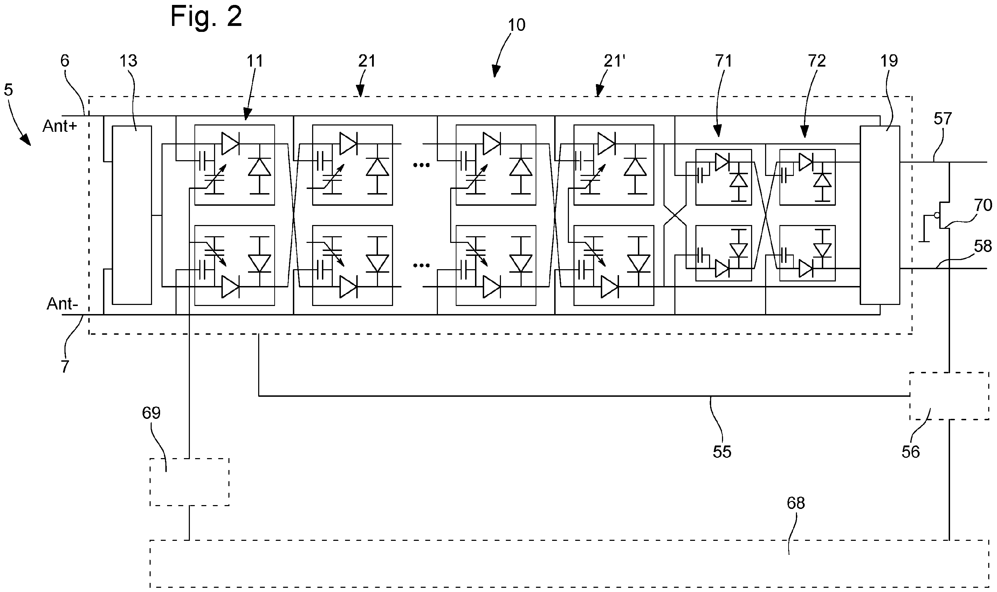

However, an optimal starting condition for an auto matching algorithm or auto matching network may be a mid-band configuration, e.g. as represented by graph 106. Since at the startup there is no voltage and therefore no way to activate the configuration pursuant to graph 106 there now is provided an excess or extra capacitance to first and second stage input 14, 15 of the rectifier circuit 10 as will be described in connection with Figs. 1 and 2 below.

As it is apparent from Figs. 1 - 3 the rectifier circuit 10 comprises a first rectifier stage 11 and a second rectifier stage 21. Optionally, the rectifier circuit 10 comprises even more stages, e.g. up to 12 stages, which are all coupled or connected in series, e.g. in a cascaded manner.

The rectifier stage 11 comprises a first stage input 14 and a second stage input 15. The first stage input 14 is connectable to one of the antenna ports 6, 7. The second stage input 15 is connectable to the other one of the antenna ports 6, 7. The first rectifier stage 11 also comprises a first stage output 16, which is connected or which is connectable to a third stage input 24 of the second rectifier stage 21. Likewise, a first stage output 17 of the first rectifier stage 11 is connectable or is connected to a fourth stage input 25 of the second rectifier stage 21. The second rectifier stage 21 may comprise a similar or identical topology or structure compared to the first rectifier stage 11, which is indicated by the dashed oval structure in Fig. 1.

The first and second stage inputs 14, 15 are provided with a capacitor branch 51. The capacitor branch 51 comprises a first capacitor 53 and a second capacitor 54. The first capacitor 53 is connected with one end to the first stage input 14. A second end of the first capacitor 53 is connected to ground. Likewise, the second capacitor 54 is connected with one end to the second stage input 15. An opposite end of the second capacitor 54 is connected to ground. By way of first and second capacitors 53, 54, there is provided a reference frequency of the resonant circuit of the rectifier circuit 10.

The first rectifier stage 11 comprises a first rectifying unit 12 and a second rectifying unit 18. Both, the first and the second rectifying units 12, 18 are implemented as transistors. The first rectifier unit 12 may comprise a first transistor 26. The second rectifier unit 18 may comprise a second transistor 28.

The gate of the first transistor 26 is connected to the second stage output 17. The gate of the second transistor 28 is connected to the first stage output 16. One of the source and the drain of the first transistor 26 is connected to the first stage input 14. The other one of the source and the drain of the first transistor 26 is connected to the first stage output 16. Likewise, one of the source and the drain of the second transistor 28 is connected to the second stage input 15 whereas the other one of the source and the drain of the second transistor 28 is connected to the second stage output 17. The transistors 26, 28 may be connected in a bridged manner. They may be cross connected with the third and fourth stage inputs of the second rectifier stage 21.

The first rectifier stage 11 further comprises a trimming capacitor arrangement 30, which is electronically switchable to at least two different capacitances. For this, the trimming capacitor arrangement 30 comprises a number of individual trimming inputs B0, B1, B2, B3, which are controllable by the logic circuit 68, e.g. via the thermometer encoder 69.

However, trimming of the trimming capacitor arrangement 30 and hence modifying the capacitance of the trimming capacitor arrangement 30 requires a voltage at the stage inputs 14, 15, which is equal to or larger than the switching voltage threshold required for electronically switching the trimming capacitor arrangement 30. The trimming capacitor arrangement 30 comprises a first capacitor branch 31 and a second capacitor branch 41. The first capacitor branch 31 is provided with a first switch arrangement 32. Likewise, the second capacitor branch 41 is provided with a second switch arrangement 42. The capacitance of each capacitor branch 31 is provided by first and second capacitors 33, 34. The first capacitor 33 is in series with a first switch 35. The second capacitor 34 is in series with a second switch 36.

The switches 35, 36 are implemented as switching transistors 37, 38. The first switching transistor 37 is in series with the first capacitor 33 and the second switching transistor 38 is in line or in series with the second capacitor 34. One of the first switching transistor 37 and the first capacitor 33 is connected to ground. The other one of the first switching transistor 37 and the first capacitor 33 is connected to the first stage input 14. Likewise, one of the second transistor 38 and the second capacitor 34 is connected to ground. The other one of the second switching transistor 38 and the second capacitor 34 is connected to the second stage input 15. The gates of the first and second switching transistors 37, 38 are interconnected. They may be operated by providing a logical one at the control input B0.

Likewise, the second capacitor branch 41 has a similar or identical structure compared to the first capacitor branch 31. Also here, there are provided first and second capacitors 34, 44 in series with first and second switches 45, 46. The switches 45, 46 are operable by providing a logical signal to the respective switching input B1.

In the illustrated embodiment there are provided four capacitor branches altogether by way of which four different capacitances can be added as an extra capacitance or excess capacitance across the first and second stage inputs 14, 15. In this way, the impedance of the rectifier circuit and hence the resonance frequency of the rectifier stage 11 can be suitably adapted to the frequency of the RF field.

As e.g. indicated in Fig. 4 and when each of the switching ports B0, B1, B2, B3 is at a logical zero the overall capacitance between the first stage input 14 and the second stage input 15 may be at a minimum, which is e.g. reflected by one of the graphs 102 or 110 of Fig. 4. In case that the RF field present at or before the startup of the rectifier circuit 10 is in a region that is far away from the initial or default resonance frequency the mismatch between the external RF field and the resonance frequency of the rectifier circuit 10 may be too large or may be suboptimal to enable a rather prompt and fast startup of the rectifier circuit 10 and hence of the entire RFID circuit 1.

Now, and by providing at least a first auxiliary rectifier stage 71 and optionally also a second auxiliary rectifier stage 72 that are coupled to first and second auxiliary switches 75, 76 of the first switchable capacitor branch 31 and which may be also coupled or connected to first and second auxiliary switches 85, 86 of a second switchable capacitor branch 42, there may be provided an extra or supplemental capacitance even in situations where the regular voltage output of the rectifier stages 11, 21 would be insufficient to initiate or to trigger the auto trimming procedure.

The supplemental auxiliary switches 75, 76, 85, 86 may be likewise connected to the first and second capacitors 33, 34, 43, 44 of the first and second capacitor branches 31, 41. The auxiliary switches 75, 76, 85, 86 may be switchable at a switching voltage, which is below a switching voltage required for switching the regular switches 35, 36, 45, 46 of the respective capacitor branches 31, 41.

By way of the auxiliary rectifier stages 71, 72 the resonance frequency of the rectifier circuit 10 can be shifted into a midrange region of the total trimming range of the trimming capacitor arrangement 30 per default and when switching the trimming capacitor arrangement 30 into a predefined auxiliary configuration. In this way, and with such a fixed additional capacitance as provided by the predefined auxiliary configuration of the trimming capacitor arrangement, a lower mismatch and a better sensitivity of the rectifier circuit and hence of the entire RFID circuit 1 can be provided at zero voltage startup conditions.

When in the predefined auxiliary configuration there may be statistically provided a better matching between the resonance frequency of the rectifier circuit and the frequency of the external RF field. Accordingly, a startup of the rectifier circuit and harvesting of energy from the external RF field can be improved.

As further indicated in Figs. 1 and 2 the rectifier circuit 10 further comprises a signal combiner 19, which is coupled to an output of the second auxiliary rectifier stage 72. The signal combiner 19 may be further connected to the first and second antenna ports 6, 7. It may be further connected to the output of a final rectifier stage 21'. The signal combiner 19 comprises a main power output 57 and an auxiliary voltage output 58. The main power output 57 may provide the main power supply for the logic circuit 68 of the RFID circuit 1. The auxiliary voltage output 58 may be coupled or connected to a separate auxiliary controller 56, which is in turn connected or coupled to the individual auxiliary switches 75, 76, 85, 86, e.g., via an auxiliary control line 55. In this way the auxiliary rectifiers 71, 72 may provide an auxiliary control voltage by way of which the auxiliary switches 75, 76, 85, 86 can be switched on, e.g., to add supplemental capacitance of the first and second capacitors 33, 34, 43, 44 of the first and second capacitor branches 31, 41.

The auxiliary control voltage can be clamped to the main rectifier voltage via a grounded gate PMOS transistor 70 when it is no longer required.

As indicated, the gate of the PMOS transistor 70 is connected to ground. The source and the drain of the PMOS transistor 70 are connected to the main power output 57 and to the auxiliary voltage output 58 of the signal combiner 19. In this way, the auxiliary output voltage may be automatically clamped to the main voltage after when there is insufficient power obtained via the regular rectifier stages 11, 21, 21'. Such clamping does not start until there is more than sufficient voltage on the auxiliary voltage output 58 to bias the switches 35, 36, 45, 46. The main voltage is clamped by the shunt regulator 62 and the auxiliary output voltage is also clamped as they are shorted together through the transistor 70.

Once the auto trimming routine starts to operate and when the algorithm can take control of the trimming switch settings B0, B1, B2, B3, the auxiliary switches 75, 76, 85, 86 are disconnected or opened by the auxiliary controller 56 via the auxiliary control line 55.

Generally, with the auxiliary rectifier path as provided by the auxiliary rectifier stages 71, 72, by the auxiliary controller 56 and by the auxiliary control line 55 configured to operate the auxiliary switches 75, 76, 85, 86, there can be derived and generated an auxiliary electrical power that does not have any DC load current. Rather, there may be provided a sufficient auxiliary voltage to drive the auxiliary switches 75, 76, 85, 86 even with a comparatively high mismatch between the resonance frequency of the rectifier circuit 10 and the external RF field. This auxiliary voltage can be used to drive the gates of the auxiliary switches 75, 76, 85, 86 to move the starting point of the trimming algorithm to the midpoint, which statistically will provide more power by reducing the frequency mismatch.

Given that the auxiliary current, i.e., the current associated with the auxiliary voltage is substantially equal to zero, then the respective auxiliary power is also substantially equal to zero. Accordingly, the output power may not be affected by the addition of the auxiliary rectifier stages 71, 72. However, in reality there will be a slight loss due to parasitic loading. By biasing the auxiliary switches 75, 76, 85, 86 with the auxiliary voltage, the output power can be increased due to a better frequency matching thus allowing the regular auto trimming algorithm starting to operate.

Ideally and in effect, the total input capacitance of the trimming capacitor arrangement 30 and the voltage dependent variable capacitor arrangement 50 at a startup condition, e.g. where a zero voltage level is present at the first stage input 14 and the second stage input 15, can be shifted close to the input impedance of the rectifier stage 11 with the trimming capacitor arrangement set to a middle of the trimming range. This can provide the appearance that the rectifier circuit and hence the entire RFID circuit 1 is starting the automatch algorithm closer to the midband region, which is statistically the best matching to transfer RF energy from the external RF field into the rectifier circuit 10. As a voltage level of e.g. about 750 mV is reached the automatic matching function can be operated. If the voltage is then continuing to change rapidly versus voltage from the switching voltage level towards a functional operation level (e.g. at 1.5 V), at which the logic circuit 68 is fully operable.

Generally, and by way of the auxiliary rectifier stages 71, the RFID circuit 1 can be rather close to a mid-band trimming, which is necessary for proper operation. Moreover, the startup sensitivity can be improved since the resonance frequency of the rectifier circuit at a startup condition (zero volt) is closer to a midpoint of the tunable range of the trimming capacitor arrangement. Accordingly, also the amount of time required for starting the automatch procedure can be decreased since there is more power available at the rectifier directly at the start of harvesting RF energy from the external field.

In the flowchart of Fig. 7 the method of operating a semiconductor device as described herein is briefly described. In a step 200 there is harvested electrical energy from an external RF field by the RF antenna 5. In a subsequent step 202 there is derived ad provided an auxiliary control signal via the operation of the first and second auxiliary rectifier stages 71, 72. Accordingly, in step 204, the auxiliary switches 75, 76, 85, 86 will be switched on thereby switching the trimming capacitor arrangement into a predefined auxiliary configuration. In step 206 the switching of the auxiliary switches in the preceding step leads to the addition of the capacitance of the first and second capacitors 33, 34, 43, 44 of the first and second switchable capacitor branches 31, 41.

Adding this supplemental capacitance provides an increased sensitivity of the rectifier circuit because it shifts the resonance frequency closer to the midpoint of a trimming range as provided by the trimming capacitor arrangement 30. Then and in a subsequent step 208 energy is harvested and the voltage across the first and the second stage input 14, 15 rises up to a switching voltage threshold required to electronically switch the trimming capacitor arrangement 30. This switching operation is then conducted in step 210 provided that the voltage across the first and the second stage input 14, 15 is sufficient to operate the switching algorithm. Thereafter in step 212 the trimming capacitor arrangement 30 is adjusted to proper trimming conditions and in step 214 the passive RFID circuit 1 switches into a functional operation mode.

### Nomenclature

- 1: RFID circuit
- 5: antenna
- 6: antenna port
- 7: antenna port
- 10: rectifier circuit
- 11: rectifier stage
- 12: rectifier unit
- 13: ground generator
- 14: stage input
- 15: stage input
- 16: stage output
- 17: stage output
- 18: rectifier unit
- 19: signal combiner
- 21: rectifier stage
- 24: stage input
- 25: stage input
- 26: transistor
- 28: transistor
- 30: trimming capacitor arrangement
- 31: capacitor branch
- 32: switch arrangement
- 33: capacitor
- 34: capacitor
- 35: switch
- 36: switch
- 37: transistor
- 38: transistor
- 41: capacitor branch
- 42: switch arrangement
- 43: capacitor
- 44: capacitor
- 45: switch
- 46: switch
- 51: capacitor branch
- 53: capacitor
- 54: capacitor
- 55: auxiliary control line
- 56: auxiliary controller
- 57: power output
- 58: auxiliary voltage output
- 60: reference voltage generator
- 62: shunt limiter
- 64: automatch comparator
- 66: ring oscillator
- 68: logic circuit
- 69: thermometer encoder
- 70: transistor
- 71: rectifier stage
- 72: rectifier stage
- 75: auxiliary switch
- 76: auxiliary switch
- 85: auxiliary switch
- 86: auxiliary switch

## Claims

1. A rectifier circuit (10) for a passive RFID circuit (1), the rectifier circuit (10) comprising:
- at least a first rectifier stage (11) comprising a first stage input (14) connectable to a first antenna port (6) and comprising a second stage input (15) connectable to a second antenna port (7),
- a first rectifying unit (12) connected to the first stage input (14) and connected to a first stage output (16),
- a second rectifying unit (18) connected to the second stage input (15) and connected to a second stage output (17),
- a trimming capacitor arrangement (30) connected to the first stage input (14) and connected to the second stage input (15), wherein the trimming capacitor arrangement (30) is electronically switchable to at least a first capacitance and to a second capacitance, and
- a first auxiliary rectifier stage (71) connected to the first antenna port (6), the second antenna port (7), the first stage output (16) and to the second stage output (17) and coupled to the trimming capacitor arrangement (30) to switch the trimming capacitor arrangement (30) into a predefined auxiliary configuration.

2. The rectifier circuit (10) according to claim 1, wherein the trimming capacitor arrangement (30) comprises a first switchable capacitor branch (31) connected to the first stage input (14) and connected to the second stage input (15).

3. The rectifier circuit according to claim 2, wherein the first switchable capacitor branch (31) comprises a first capacitor (33) in series with a first switch (35), wherein one of the first capacitor (33) and the first switch (35) is connected to ground and wherein the other one of the first capacitor (33) and the first switch (35) is connected to the first stage input (14).

4. The rectifier circuit according to claim 3, wherein the first switchable capacitor branch (31) comprises a first auxiliary switch (73) parallel to the first switch (33) and in series with the first capacitor (33), wherein the first auxiliary switch (73) is coupled to any is switchable by an output of the first auxiliary rectifier stage (71).

5. The rectifier circuit according to claim any one of the preceding claims 2 - 4, wherein the first switchable capacitor branch (31) comprises a second capacitor (34) in series with a second switch (36), wherein one of the second capacitor (34) and the second switch (36) is connected to ground and wherein the other one of the second capacitor (34) and the second switch (36) is connected to the second stage input (15).

6. The rectifier circuit according to claim 5, wherein the first capacitor branch (31) comprises a second auxiliary switch (76) parallel to the second switch (36) and in series with the second capacitor (34), wherein the second auxiliary switch (76) is connected to the auxiliary control line (55) and is switchable by an output of the first auxiliary rectifier stage (71).

7. The rectifier circuit according to any one of the preceding claims, further comprising a second auxiliary rectifier stage (72) connected to a first and a second stage output of the first auxiliary rectifier stage (71) and connected to the first and second antenna ports (6, 7), wherein the first auxiliary rectifier stage (71) is coupled to the trimming capacitor arrangement (30) via the second auxiliary rectifier stage (72).

8. The rectifier circuit according to any one of the preceding claims, further comprising a signal combiner (19) connected to first and second stage outputs of a final rectifier stage (21'), connected to the first and second antenna ports (6, 7) and connected to a first and a second output of the first or second auxiliary rectifier stage (71, 72), wherein the signal combiner (19) comprises an auxiliary voltage output (58) which is coupled or connected to the trimming capacitor arrangement (30).

9. The rectifier circuit according to claim 8, wherein the signal combiner (19) comprises a main power output (57) connected to the auxiliary voltage output (58) via a grounded gate PMOS transistor (70).

10. The rectifier circuit (10) according to any one of the preceding claims, wherein the trimming capacitor arrangement (30) comprises a second switchable capacitor branch (41) parallel to the first switchable capacitor branch (31).

11. The rectifier circuit (10) according to any one of the preceding claims 8 to 10, further comprising an auxiliary controller (56) coupled to at least one of the first and the second auxiliary rectifier stage (71, 72) and operable to enable or to disable an operation of the trimming capacitor arrangement (30) and the predefined auxiliary configuration.

12. The rectifier circuit (10) according to any one of the preceding claims, wherein the trimming capacitor arrangement (30) is switchable between a minimum capacitance and a maximum capacitance and wherein when in the predefined auxiliary configuration, the trimming capacitor arrangement (30) comprises a medium capacitance, which is larger than the minimum capacitance and smaller than the maximum capacitance.

13. The rectifier circuit (10) according to any one of the preceding claims,
- wherein the first rectifying unit (12) comprises a first transistor (26), wherein one of a source and a drain of the first transistor (26) is connected to the first stage input (14), wherein the other one of the source and the drain of the first transistor (26) is connected to the first stage output (16) and wherein a gate of the first transistor (26) is connected to the second stage output (17), and/or
- wherein the second rectifying unit (18) comprises a second transistor (28), wherein one of a source and a drain of the second transistor (28) is connected to the second stage input (15), wherein the other one of the source and the drain of the second transistor (28) is connected to the second stage output (17) and wherein a gate of the second transistor (28) is connected to the first stage output (16).

14. A semiconductor device (1) comprising
- a RF antenna (5),
- a rectifier circuit (10) according to any one of the preceding claims connected to the RF antenna (5),
- a logic circuit (68) operable to electronically switch the trimming capacitor arrangement (30) of the rectifier circuit (10) to at least one of the first capacitance and the second capacitance.

15. A method of operating a semiconductor device (1) according to claim 14, the method comprising the steps of:
- harvesting electrical energy from an external RF field by the RF antenna (5),
- deriving and providing an auxiliary control signal when an input voltage derived from the external RF field is below a switching voltage threshold required to electronically switch the trimming capacitor arrangement (30), and
- switching the trimming capacitor arrangement (30) into a predefined auxiliary configuration based on the auxiliary control signal.
